# EUROPEAN PATENT SPECIFICATION

(11) **EP 4 638 080 B1**
(45) Date of publication and mention of the grant of the patent: **11.11.2026**
(21) Application number: 23820959.7
(22) Date of filing: 12.12.2023
(51) Int. Cl.: B29B 9/06, B29B 9/12, B29B 7/60, B29B 7/94, C08J 3/12, B29C 48/04, B29B 7/42, B29B 7/48, B29C 48/05, B29C 48/345

(54) **PROCESS FOR THE PRODUCTION OF POLYOLEFIN PELLETS**
VERFAHREN ZUR HERSTELLUNG VON POLYOLEFIN-PELLETS
PROCÉDÉ DE PRODUCTION DE GRANULÉS DE POLYOLÉFINE

(30) Priority: 20.12.2022 EP 22215196
(43) Date of publication of application: 29.10.2025
(73) Proprietor: INEOS Europe AG, 1180 Rolle, Vaud (CH)
(72) Inventor: COUSIN, Frederic, 1640 Rhode Sainte Genese (BE)
(74) Representative: Mathisen & Macara LLP
(86) International application number: PCT/EP2023/085296
(87) International publication number: WO 2024/132678

(56) References cited:
- EP-A1- 3 175 967
- EP-A2- 0 426 025
- WO-A1-2005/111091
- WO-A1-2013/178673
- WO-A1-2014/044856
- DE-A1- 102005 033 731
- US-A- 5 789 501
- US-A1- 2019 193 303
- US-A1- 2021 221 965
- US-B2- 9 487 635

## Description

The present invention relates to a process for the production of polyolefin pellets in an extruder.

The extrusion of polyolefin in an extruder to form pellets is well-known from e.g. WO 2005/111091 A1, US 2019/193303 A1 and EP 0 683 176 A1 and is commonly applied on the polyolefin powder produced in a polyolefin production process. In particular pellets are easier to handle with a lower tendency to stickiness or other flowability issues compared to a powder.

It is also known to contact polyolefin powder with water and/or oxygen prior to extrusion to deactivate any residual catalyst. EP 0683176, for example, teaches a process in which polyethylene powder is depressurised, then subjected to respective "non-deactivating" and "deactivating" flushings. The deactivating flushing uses a mixture of water, oxygen and nitrogen, and results in an improvement of the yellowness index and whiteness of the obtained pelleted polyolefin

Whilst the teaching of EP 0683176 is that some steps may be performed in the same vessel nevertheless performing multiple sequential steps in a single vessel in a process with continuous polyolefin production adds significant complexity, for example requiring buffering vessels for the powder. In contrast, using multiple vessels for the steps adds significantly to the cost.

We have now found a process which enables production of polyolefin pellets with high whiteness/low yellowness index whilst avoiding the complexity of the prior art.

Thus, in a first aspect there is provided a process for the production of polyolefin pellets which comprises
i) passing polyolefin to a feed hopper of an extruder,
ii) passing the polyolefin from the feed hopper to the extruder, and
iii) pelletising the polyolefin in the extruder,
characterised in that the polyolefin is contacted with water and oxygen prior to pelletising, and that the contact with oxygen takes place by contacting the polyolefin with a gas mixture comprising oxygen in the feed hopper of the extruder, the amount of oxygen being less than 500 ppm by weight relative to the polyolefin, the pressure in the feed hopper being less than 0.05 MPa and the residence time of the polyolefin in the feed hopper being less than 0.2 hours.

In particular, whilst it is known that contact of polyolefin with water and oxygen can provide improvements in Whiteness and Yellowness Index, we have found that performing the contact with oxygen in the feed hopper can also provide these advantageous effects.

Performing the contact with oxygen in a feed hopper of an extruder, however, avoids a dedicated vessel upstream of the extruder feed hopper for this contact. Further, the effect can be obtained using relatively low amounts of oxygen at low pressure and even though the residence time in the extruder hopper is low.

(For example, in EP 0683176, the average residence time in the deactivating flushing is 0.2 to 5 hours, preferably from 0.5 to 3 hours and more particularly greater than 1 hour and less than 3 hours, whilst the pressure may be from 0.05 to 0.4 MPa, preferably from 0.1 to 0.3 MPa, in particular from 0.11 to 0.25 MPa.)

More particularly, high levels of whiteness/low levels of Yellowness Index are seen even when the residence time of the polyolefin in the feed hopper is less than 1 minute, or even less than 30 seconds, such as less than 10 seconds.

As used herein, "residence time" is the average residence time of the polyolefin in the feed hopper. (The polyolefin is usually in the form of a powder.) The average residence time is equal to the volume of polyolefin in the feed hopper divided by the polyolefin volumetric flow rate to the hopper. (Amount of polyolefin by mass and mass flow rate can also be used.) For example, if there is maintained a level of polyolefin in the feed hopper corresponding to 10 m³ by volume and the flow rate to the hopper is 1 m³/s, then the average residence time is 10 seconds. Where the volume of polyolefin maintained or flow rate may vary with time, then an average should be determined over 1 hour.

In preferred embodiments no polyolefin level or volume is maintained in the feed hopper, and the residence time, as defined herein, is zero. (In practise, of course, the polyolefin still needs to pass through the feed hopper and therefore does spend some time in the hopper and in contact with the gas mixture.)

The amount of oxygen provided in the gas mixture is less than 500 ppm by weight relative to the polyolefin. Since there is not necessarily maintained a level of polyolefin in the feed hopper, the concentration of oxygen is most effectively defined relative to the flow rate of the polyolefin i.e. to maintain an oxygen concentration of 500ppm by weight relative to the polyolefin then for every 1 kg/s of polyolefin introduced 0.5g/s of oxygen is also introduced to the feed hopper.

In preferred embodiments, the amount of oxygen is less than 250ppm, such as in the range 20 to 100ppm, for example 30 to 60 ppm, by weight relative to the polyolefin.

The main part of the gas mixture is an inert gas, preferably nitrogen. The required oxygen concentration may be obtained by mixing pure oxygen or air with nitrogen to the required concentration.

A yet further, and highly significant, advantage of the present invention, is that the extruder system in a conventional polyolefin production process layout is "isolated" from the upstream polyolefin degassing steps. Thus, any oxygen used in the feed hopper of the extruder cannot find its way into the reactor recycle system. In contrast, in a process such as in EP 0683716, especially where multiple steps are performed in a single vessel, oxygen can get into the recycling systems by which degassed monomers are recycled to the reactors. Oxygen is difficult to separate from such streams, and whilst the levels of oxygen are usually too low to be a flammability issue, the oxygen is a poison for the polymerisation catalyst, which can therefore have a significant impact on the polymerisation process. (Oxygen being a poison if, of course, why it is used in the deactivating flushing in the first place.) In the present invention this possibility is avoided.

The present invention is also easier to put into practice than addition of oxygen to the extruder itself, for example by injection into the polyolefin melt. Injection into the melt in the extruder generally requires injection at higher pressure, and it is difficult to ensure even contact of the melt with the oxygen.

In the present invention, the gas mixture comprising oxygen may be provided to the feed hopper by any suitable means. Typically, the polyolefin is provided to the extruder feed hopper from an upstream silo via a polyolefin feed line which connects the silo to the extruder feed hopper. The pressure in the polyolefin feed line is generally similar to the pressure in the extruder feed hopper, and in particular is generally less than 0.05 MPa. In one option the gas mixture comprising oxygen may also be fed to the polyolefin feed line i.e. between the silo and the extruder feed hopper. (The polyolefin and gas mixture then pass to the extruder feed hopper together.) Whilst the gas mixture and polyolefin are then contacted prior to the extruder feed hopper in this option, typically the contact time prior to the extruder feed hopper is relatively short, such as less than 5 minutes, or more preferably less than 2 minutes.) Usually, and preferably, the gas mixture is introduced to the feed hopper via one or more gas feed ports located on the feed hopper. In particular, it is preferred that no contacting of the polyolefin with the gas mixture comprising oxygen takes place prior to the polyolefin entering the extruder feed hopper. Preferably, the gas mixture is introduced via one or more gas feed ports where at least one gas feed port is located at or close to the base of the feed hopper, and in particularly within 100cm vertical height from the base of the feed hopper, such as within 80cm vertical height from the base of the feed hopper. (Any other gas feed ports in this preferred embodiment may also be located at or close to the base or may be higher.)

The pressure in the feed hopper is less than 0.05 MPa. (As used herein all values of pressure quoted are gauge pressure unless otherwise noted i.e. the pressure in the feed hopper is less than 0.05 MPa gauge.) The pressure is preferably less than 0.02 MPa. In general, the pressure in the feed hopper is preferably at ambient pressure or close to ambient pressure. Whilst the pressure may be lower than ambient pressure, it is preferably from 0 to 10 kPa. Since the feed hopper is generally at relatively low pressure no specific complications arise in the introduction of the gas mixture.

In embodiments a slight overpressure may be maintained in the feed hopper to prevent external air ingress and to ensure the composition of the atmosphere in the extruder feed hopper is suitably controlled. The pressure may be maintained by a suitable gas outlet on the hopper. In preferred embodiments this outlet may comprise a filter to prevent any entrained powder withdrawal

In the present invention the polyolefin is also contacted with water prior to pelletising. Preferably, the polyolefin is contacted with an amount of water which is less than 1000 ppm by weight relative to the polyolefin, such as less than 500 ppm, for example 300-500 ppm by weight relative to the polyolefin.

In embodiments, the contact with water may be performed upstream of the feed hopper, for example in an upstream degassing step. (Whilst water is also a potential poison for the catalyst, water is generally easier to remove from any upstream recycle streams, for example by condensation. Thus, at least some of the potential issues discussed above in relation to use of oxygen in upstream steps are not an issue for water.)

Preferably, however, in the present invention the contact with water is also performed in the extruder feed hopper.

The water may be added in any suitable manner, but is typically, and preferably, added in the form of steam, and in particular, by contacting the polyolefin with a gas mixture comprising steam. Where the contacting takes place in the extruder feed hopper a gas mixture comprising oxygen and steam may be used, for example.

The process of the present invention may be applied to any suitable polyolefin to be pelletised, and particularly where "colour" of the product could be an issue. This may be particularly the case for blow moulding, film or pipe grades of polyolefin for example.

The polyolefin is generally in the form of a powder when passed to the feed hopper. Although not preferred, it is not precluded, however, that previously pelletised polyolefin can be used in the present invention. (The pelletising then being a "repelletising".)

The polyolefin may be a polymer of any suitable olefin, such as a polymer of a C2 to C8 olefin, but the present invention is most preferably applied where the polyolefin is a polyethylene or a polypropylene, and especially where the polyolefin is a polyethylene.

Processes for the production of polyethylene, polypropylene and other polyolefins are well known in the art, and the polyolefin in the present invention may be made by any known method. In relation to polyethylene in particular, for example, the polyolefin may be made by gas phase, solution phase or slurry phase processes, or processes which involve stages in two or more phases, such as processes which involve a slurry phase polymerisation step followed by a gas phase polymerisation step.

Even where a process involves only a single "type" of polymerisation, the polyolefin may be produced in two or more reactors, either in series or in parallel.

Correspondingly, the polyolefin may be a monomodal polyolefin or a multimodal, such as bimodal, polyolefin, preferably a monomodal or multimodal polyethylene.

The polyolefin may have been produced by any suitable catalyst system, including chromium-type catalysts, Ziegler-Natta catalysts and metallocene catalysts, as well as multicomponent catalysts.

Where the polyolefin is polyethylene, the polyethylene may be a homopolymer or a copolymer of ethylene with one or more C3-C10 comonomers, such as propylene, 1-butene, 1-hexene or 1-octene. The polyethylene may be of any suitable density, such as high density, medium density, low density and so on. It is preferably a high density polyethylene, which as used herein means a polyethylene with a density of at least 930 kg/m³, typically 930-970 kg/m³.

Where the polyolefin is polyethylene, particular preference in the present invention is given to processes in which the polyethylene is a bimodal polyethylene, and most particularly which has been produced in two loop slurry reactors in series. Examples of suitable polyolefins and/or processes for their production, can be found, for example, in EP WO2013178673A1, WO14001288, WO08006487 and EP 2336201 A1.

The preferred polyethylenes used in the present invention are produced using Ziegler-Natta catalysts, and most preferably are bimodal polyethylenes produced using such a catalyst in a slurry polymerisation process using two loop reactors in series.

The extruder to be used for pelletising the polyolefin is also not particularly limited. Commercial extruders for pelletising of polyolefins are well known in the art, and include single and twin screw extruders for example. The size of the extruder is usually defined by the required throughput. The pelletising typically takes place by melting the polyolefin (in the extruder) and passing the molten polyolefin through a die plate. The polyolefin strand exiting the die plate may be cooled, for example by a stream of water, whilst a rotating cutter cuts the strand of polyolefin exiting the die plate into pellets. Where water is used to cool the pellets then the pellets may be transported in the stream of water, separated therefrom and dried. Examples of such pelletisers can be found, for example, in EP0805009 and US3436449.

The present invention can be illustrated by the following examples.

### Examples

### Measurement of the whiteness index (WI) and the yellowness index (YI) of the polyolefins

The method used in all Examples is that described by ASTM-E-313 for the whiteness index (WI) and by ASTM-D-1925 for the YI. The colorimeter used in the present Examples was a HUNTERLAB Labscan^{®} XE, manufactured by HUNTERLAB. It emerges from this method that when an increase in the degree of whiteness of a polyolefin is observed, the value of the WI increases whereas that of the YI decreases.

### Example 1 and Comparative Example 1

### Production of polyolefin

A high density bimodal polyethylene powder was produced using a Ziegler-Natta catalyst in two slurry loop polymerisation reactors connected in series, and in particular according to the teachings of WO2013178673A1 and using 1-hexene as comonomer.

The product had a density of 958 kg/m³ and a melt index (MI₂) of 0.3 g/10min, and is suitable as a blow moulding grade.

The polyethylene powder produced was degassed to remove entrained unreacted monomers, and then extruded as described below.

### Comparative Example 1

The degassed polyethylene powder produced was passed to an extruder with a standard additive package comprising an antioxidant.

The extruder was a KOBE LCM360H twin screw extruder manufactured by KOBE Steel, Japan.

The polyethylene powder flowrate to the hopper was 10,200 kg/h, and no powder level was maintained in the hopper. The polyethylene powder therefore passed straight through the hopper into the extruder. (Residence time, as defined herein, is zero seconds.)

The pressure in the feed hopper was 2.5 kPa (gauge). In this comparative example there was fed to the hopper a gas mixture of water (in the form of steam) and nitrogen, at a flow rate of 5 kg/h water and 85 kg/h of nitrogen. This corresponds to an amount of water of 490ppm relative to the polyethylene.

The product obtained had a YI of about 7, and a WI of about 45.

### Example 1

The process of Comparative Example 1 was repeated except that air was also fed to the hopper, and in particular the gas mixture was 5 kg/h water (in the form of steam), 2.5 kg/h of air and 82.5 kg/h of nitrogen.

Thus, there were fed 490 ppm water and 51 ppm oxygen (245 ppm air) relative to the polyethylene.

The YI improved to about 0, and the WI to about 69

The above examples show that by adding air in the feed hopper according to the process of the invention, it was possible to obtain products of high levels of WI and YI. This is despite the fact that the air is only required at low levels in the feed hopper, and that a low residence time and pressure are used.

(It should also be noted that use of oxygen/air without steam also provides products which do not have satisfactory properties.)

### Examples 2 to 4 and Comparative Examples 2 to 4

### Polyolefins

A series of high density bimodal polyethylene powders were produced and extruded in the absence and presence of oxygen.

The polyethylene of Example 2 is the same as that of Example 1.

The polyethylene of Example 3 is a high density bimodal polyethylene produced according to the teachings of WO14001288. The polyethylene has a density of 952 kg/m³ and a high load melt index (HLMI) of 8.5 g/10min, and is suitable as a high density film grade.

The polyethylene of Example 4 is a high density bimodal polyethylene produced according to the teachings of WO08006487. The polyethylene has a density of 948.5 kg/m³ and a melt index (MI₅) of 0.3 g/10min, and is suitable as a pipe grade.

### Comparative Examples 2 to 4

The polyethylenes were passed to an extruder with a standard additive package comprising an antioxidant.

The extruder in these Examples was a COLLIN P-Series E20P extruder, manufactured by COLLIN Lab & Pilot Solutions GmbH.

No polyethylene powder level was maintained in the hopper. The polyethylene powder therefore passed straight through the hopper into the extruder. (Residence time, as defined herein, is zero seconds.)

The pressure in the feed hopper was 2.5 kPa (gauge).

In the comparative examples there was fed to the hopper a gas mixture of water (in the form of steam) and nitrogen, at a flow rate of 500 ppm steam relative to the polyethylene.

The results are shown in Table 1.

### Examples 2 to 4

The process of the Comparative Examples was repeated except that the gas mixture comprised 300 ppm steam and 52.5 ppm oxygen (250ppm air) relative to the polyethylene.

The results are shown in Table 1.

**Table 1**

| Example | YI |
|---|---|
| | |
| Comparative Example 2 | 8.63 |
| Example 2 | 0.133 |
| Comparative Example 3 | 5.53 |
| Example 3 | -0.82 |
| Comparative Example 4 | 4.37 |
| Example 4 | 0.01 |

Again it can be seen that by adding air in the feed hopper according to the process of the invention, it was possible to obtain products of high levels of YI.

## Claims

1. A process for the production of polyolefin pellets which comprises
i) passing polyolefin to a feed hopper of an extruder,
ii) passing the polyolefin from the feed hopper to the extruder, and
iii) pelletising the polyolefin in the extruder,
**characterised in that** the polyolefin is contacted with water and oxygen prior to pelletising, and that the contact with oxygen takes place by contacting the polyolefin with a gas mixture comprising oxygen in the feed hopper of the extruder, the amount of oxygen being less than 500 ppm by weight relative to the polyolefin, the pressure in the feed hopper being less than 0.05 MPa and the residence time of the polyolefin in the feed hopper being less than 0.2 hours, the residence time of the polyolefin in the feed hopper being equal to the volume of polyolefin in the feed hopper divided by the polyolefin volumetric flow rate to the hopper, and with the proviso that where the volume of polyolefin or flow rate may vary with time, then an average should be determined over 1 hour.

2. A process according to claim 1 wherein the contact with water and oxygen takes place by contacting the polyolefin with a gas mixture comprising oxygen and water in the feed hopper of the extruder.

3. A process according to claim 1 or claim 2 wherein the amount of water is less than 1000 ppm by weight relative to the polyolefin.

4. A process according to claim 3 wherein the amount of water is less than 500 ppm, for example 300-500 ppm by weight relative to the polyolefin.

5. A process according to any one of the preceding claims wherein the residence time of the polyolefin in the feed hopper is less than 1 minute, or even less than 30 seconds, such as less than 10 seconds.

6. A process according to any one of the preceding claims wherein no level of polyolefin is maintained in the feed hopper, and the residence time, as defined herein, is zero.

7. A process according to any one of the preceding claims wherein the amount of oxygen in the range 20 to 100ppm, for example 30 to 60 ppm, by weight relative to the polyolefin.

8. A process according to any one of the preceding claims wherein the gas mixture comprising oxygen, and optionally water, is introduced via a gas feed port located at or close to the base of the feed hopper.

9. A process according to any one of the preceding claims wherein the pressure in the feed hopper is less than 0.02 MPa, such as in the range 0 to 10 kPa.

10. A process according to any one of the preceding claims wherein the polyolefin is a polyethylene or a polypropylene.

11. A process according to claim 10 wherein the polyolefin is a polyethylene.

12. A process according to claim 11 wherein the polyethylene is a bimodal polyethylene, and most particularly which has been produced in two loop slurry reactors in series.

13. A process according to claim 11 or claim 12 wherein polyethylene is a high density polyethylene with a density of 930-970 kg/m³.

14. A process according to any one of the preceding claims wherein the polyolefin is a Ziegler-Natta catalyst polyolefin.

## Patentansprüche

1. Verfahren für die Herstellung von Polyolefin-Granulat, das Folgendes umfasst
i) Zuführen von Polyolefin an einen Einfülltrichter eines Extruders,
ii) Zuführen des Polyolefins von dem Einfülltrichter zu dem Extruder und
iii) Granulieren des Polyolefins in dem Extruder,
**dadurch gekennzeichnet, dass** das Polyolefin vor dem Granulieren mit Wasser und Sauerstoff in Kontakt gebracht wird, und dass der Kontakt mit Sauerstoff durch Inkontaktbringen des Polyolefins mit einem Gasgemisch, das Sauerstoff umfasst, in dem Einfülltrichter des Extruders erfolgt, wobei die Sauerstoffmenge weniger als 500 ppm bezogen auf das Gewicht des Polyolefins ist, der Druck in dem Einfülltrichter weniger als 0,05 MPa ist und die Verweilzeit des Polyolefins in dem Einfülltrichter weniger als 0,2 Stunden ist, wobei die Verweilzeit des Polyolefins in dem Einfülltrichter gleich dem Volumen des Polyolefins in dem Einfülltrichter geteilt durch den Volumenstrom des Polyolefins zu dem Trichter ist, und unter der Bedingung, dass, wenn das Volumen des Polyolefins oder die Durchflussrate mit der Zeit variieren kann, ein Durchschnitt über 1 Stunde zu bestimmen ist.

2. Verfahren nach Anspruch 1, wobei der Kontakt mit Wasser und Sauerstoff durch Inkontaktbringen des Polyolefins mit einem Gasgemisch, das Sauerstoff und Wasser umfasst, in dem Einfülltrichter des Extruders erfolgt.

3. Verfahren nach Anspruch 1 oder Anspruch 2, wobei die Wassermenge weniger als 1000 ppm bezogen auf das Gewicht des Polyolefins ist.

4. Verfahren nach Anspruch 3, wobei die Wassermenge weniger als 500 ppm, zum Beispiel 300-500 ppm bezogen auf das Gewicht des Polyolefins ist.

5. Verfahren nach einem der vorhergehenden Ansprüche, wobei die Verweilzeit des Polyolefins in dem Einfülltrichter weniger als 1 Minute oder sogar weniger als 30 Sekunden, wie weniger als 10 Sekunden, ist.

6. Verfahren nach einem der vorhergehenden Ansprüche, wobei kein Polyolefinniveau in dem Einfülltrichter aufrechterhalten wird und die Verweilzeit, wie hier definiert, null ist.

7. Verfahren nach einem der vorhergehenden Ansprüche, wobei die Sauerstoffmenge in dem Bereich von 20 bis 100 ppm, zum Beispiel 30 bis 60 ppm bezogen auf das Gewicht des Polyolefins ist.

8. Verfahren nach einem der vorhergehenden Ansprüche, wobei das Gasgemisch, das Sauerstoff und optional Wasser umfasst, über eine Gaszufuhröffnung eingeleitet wird, die sich an dem Boden des Einfülltrichters oder in dessen Nähe befindet.

9. Verfahren nach einem der vorhergehenden Ansprüche, wobei der Druck in dem Einfülltrichter weniger als 0,02 MPa, wie in dem Bereich von 0 bis 10 kPa, ist.

10. Verfahren nach einem der vorhergehenden Ansprüche, wobei das Polyolefin ein Polyethylen oder ein Polypropylen ist.

11. Verfahren nach Anspruch 10, wobei das Polyolefin ein Polyethylen ist.

12. Verfahren nach Anspruch 11, wobei das Polyethylen ein bimodales Polyethylen ist, und das insbesondere in zwei in Reihe geschalteten Schlaufensuspensionsreaktoren hergestellt wurde.

13. Verfahren nach Anspruch 11 oder 12, wobei das Polyethylen ein Polyethylen hoher Dichte mit einer Dichte von 930-970 kg/m³ ist.

14. Verfahren nach einem der vorhergehenden Ansprüche, wobei das Polyolefin ein Ziegler-Natta-Katalysator-Polyolefin ist.

## Revendications

1. Procédé de production de granulés de polyoléfine qui comprend
i) passage de polyoléfine dans une trémie d'alimentation d'une extrudeuse,
ii) passage de la polyoléfine de la trémie d'alimentation à l'extrudeuse, et
iii) granulation de la polyoléfine dans l'extrudeuse,
**caractérisé en ce que** la polyoléfine est mise en contact avec de l'eau et de l'oxygène avant la granulation, et que le contact avec l'oxygène a lieu en mettant la polyoléfine en contact avec un mélange gazeux comprenant de l'oxygène dans la trémie d'alimentation de l'extrudeuse, la quantité d'oxygène étant inférieure à 500 ppm en poids par rapport à la polyoléfine, la pression dans la trémie d'alimentation étant inférieure à 0,05 MPa et le temps de séjour de la polyoléfine dans la trémie d'alimentation étant inférieur à 0,2 heure, le temps de séjour de la polyoléfine dans la trémie d'alimentation étant égal au volume de polyoléfine dans la trémie d'alimentation divisé par le débit volumique de polyoléfine vers la trémie, étant entendu que lorsque le volume de polyoléfine ou le débit peuvent varier avec le temps, une moyenne doit alors être déterminée sur 1 heure.

2. Procédé selon la revendication 1, dans lequel le contact avec l'eau et l'oxygène a lieu en mettant en contact la polyoléfine avec un mélange gazeux comprenant de l'oxygène et de l'eau dans la trémie d'alimentation de l'extrudeuse.

3. Procédé selon la revendication 1 ou la revendication 2, dans lequel la quantité d'eau est inférieure à 1000 ppm en poids par rapport à la polyoléfine.

4. Procédé selon la revendication 3 dans lequel la quantité d'eau est inférieure à 500 ppm, par exemple 300 à 500 ppm en poids par rapport à la polyoléfine.

5. Procédé selon l'une quelconque des revendications précédentes, dans lequel le temps de séjour de la polyoléfine dans la trémie d'alimentation est inférieur à 1 minute, voire inférieur à 30 secondes, par exemple inférieur à 10 secondes.

6. Procédé selon l'une quelconque des revendications précédentes, dans lequel aucun niveau de polyoléfine n'est maintenu dans la trémie d'alimentation, et le temps de séjour, tel que défini ici, est nul.

7. Procédé selon l'une quelconque des revendications précédentes, dans lequel la quantité d'oxygène est comprise entre 20 et 100 ppm, par exemple entre 30 et 60 ppm, en poids par rapport à la polyoléfine.

8. Procédé selon l'une quelconque des revendications précédentes, dans lequel le mélange gazeux comprenant de l'oxygène et éventuellement de l'eau est introduit par l'intermédiaire d'un orifice d'alimentation en gaz situé au niveau ou à proximité de la base de la trémie d'alimentation.

9. Procédé selon l'une quelconque des revendications précédentes, dans lequel la pression dans la trémie d'alimentation est inférieure à 0,02 MPa, par exemple dans la plage de 0 à 10 kPa.

10. Procédé selon l'une quelconque des revendications précédentes, dans lequel la polyoléfine est un polyéthylène ou un polypropylène.

11. Procédé selon la revendication 10 dans lequel la polyoléfine est un polyéthylène.

12. Procédé selon la revendication 11 dans lequel le polyéthylène est un polyéthylène bimodal, et plus particulièrement qui a été produit dans deux réacteurs à suspension en boucle en série.

13. Procédé selon la revendication 11 ou la revendication 12 dans lequel le polyéthylène est un polyéthylène haute densité d'une densité de 930 à 970 kg/m³.

14. Procédé selon l'une quelconque des revendications précédentes, dans lequel la polyoléfine est une polyoléfine catalytique de Ziegler-Natta.
